# EUROPEAN PATENT APPLICATION

(11) **EP 4 769 502 A1**
(43) Date of publication of application: **01.07.2026**
(21) Application number: 25857271.8
(22) Date of filing: 08.08.2025
(51) Int. Cl.: H01M 4/04, B65G 65/48

(54) **APPARATUS AND METHOD FOR MANUFACTURING ELECTRODE SHEET**

(30) Priority: 20.08.2024 KR 20240111271
(71) Applicant: LG Energy Solution, Ltd., Seoul 07335 (KR)
(72) Inventor: JANG, Sang Soo, Daejeon 34122 (KR); LEE, Nam Jeong, Daejeon 34122 (KR); KWAK, Sang Min, Daejeon 34122 (KR); SHIN, Dong Oh, Daejeon 34122 (KR); JUNG, Jong Hyun, Daejeon 34122 (KR); YANG, Jeong Min, Daejeon 34122 (KR); HAN, Seung Hee, Daejeon 34122 (KR); OH, Sol Seon, Daejeon 34122 (KR); PARK, Yo Sub, Daejeon 34122 (KR)
(74) Representative: Goddar, Heinz J.
(86) International application number: PCT/KR2025/012041
(87) International publication number: WO 2026/043182

(57) **Abstract**

The present disclosure relates to an apparatus of manufacturing an electrode sheet, and the apparatus of manufacturing an electrode sheet according to one aspect of the present disclosure may include a pair of pressure rollers disposed parallel to each other to form a gap therebetween; and a hopper unit for feeding powder into the gap, wherein the hopper unit may include a manufacturing powder feeding portion configured to feed manufacturing powder for manufacturing an electrode sheet into one section of the gap; and a reverse pressure powder feeding portion configured to feed reverse pressure powder into another section of the gap.

## Description

### TECHNICAL FIELD

### CROSS-REFERENCE TO RELATED APPLICATIONS

The present application is based on and claims priority from Korean Patent Application No. 10-2024-0111271, filed on August 20, 2024, with the Korean Intellectual Property Office, the disclosure of which is incorporated herein in its entirety by reference.

### TECHNICAL FIELD

The present disclosure relates to an apparatus and method of manufacturing an electrode sheet, and more specifically, to an apparatus and method of manufacturing an electrode sheet capable of charging and discharging electric energy.

### BACKGROUND ART

A secondary battery has been applied to small-sized applications such as mobile devices or laptop computers, but recently, the research direction has been expanded to medium and large-sized applications, and it is widely used in applications requiring high voltage and large capacity in relation to energy storage systems (ESSs) or electric vehicles (EVs). Such a secondary battery may be formed by stacking electrodes composed of a positive electrode or a negative electrode with a separator between them.

An electrode may be formed by attaching a film-shaped electrode sheet to a foil-shaped current collector. At this time, the electrode sheet may be manufactured by pressing and forming a powder in the form of a slurry in which an electrode active material, a binder, a conductive material, and the like are mixed. In general, the powder may be pressed and formed by a pair of pressure rollers. As the powder is fed into and compressed within the gap formed between the pair of pressure rollers, it may be formed into a film-shaped electrode sheet and then discharged.

At this time, both ends of the pressure rollers may be rotatably supported on a support by bearings. And, in order to form pressure (static pressure) for compressing the powder in the gap, the support may apply a force to both ends of the pressure rollers in a direction in which the pair of pressure rollers get closer to each other.

However, as the powder is fed into the central part of the pressure roller, pressure (reverse pressure) is generated in a direction opposite to the force applied by the support to the end of the pressure roller. Due to the difference in the direction and point of application of the force, deformation may occur in the pressure roller. For example, the pressure roller may be bent outward due to the above force.

The deformation of the pressure roller described above causes a pressure difference between the central part and the side part of the gap, which may affect the width direction properties of the electrode sheet to be manufactured. For example, the electrode sheet may have non-uniform thickness, density, electrode capacity, or electrode resistance in the width direction.

### DISCLOSURE

### TECHNICAL PROBLEM

The present disclosure is designed to solve the above-described problems, and therefore the present disclosure is directed to providing an apparatus and method of manufacturing an electrode sheet capable of manufacturing high-quality electrode sheets having uniform quality in the width direction by minimizing the deformation of pressure rollers.

Technical problems to be solved by the present disclosure are not limited to the above-described problems, and other problems not mentioned herein may be clearly understood by those having ordinary skill in the art from the following description of the present disclosure.

### TECHNICAL SOLUTION

According to one aspect of the present disclosure, there is provided an apparatus of manufacturing an electrode sheet including a pair of pressure rollers disposed parallel to each other to form a gap therebetween; and a hopper unit for feeding powder into the gap, wherein the hopper unit includes a manufacturing powder feeding portion configured to feed manufacturing powder for manufacturing an electrode sheet into one section of the gap; and a reverse pressure powder feeding portion configured to feed reverse pressure powder into another section of the gap.

The reverse pressure powder feeding portion may allow the reverse pressure powder to be fed to reduce the pressure difference between the central part and the side part of the one section.

The pressure formed in the one section may be configured to decrease due to the pressure formed by the reverse pressure powder.

The manufacturing powder feeding portion and the reverse pressure powder feeding portion may be spaced apart from each other in the extension direction of the gap to allow the electrode sheet formed from the manufacturing powder and the reverse pressure sheet formed from the reverse pressure powder to be partitioned.

The hopper unit may include a pair of manufacturing powder feed surfaces disposed to face each other along the extension direction of the gap; an outer reverse pressure powder feed surface facing the manufacturing powder feeding portion in the extension direction of the gap; and an inner reverse pressure powder feed surface disposed between the manufacturing powder feeding portion and the outer reverse pressure powder feed surface and facing the outer reverse pressure powder feed surface, the manufacturing powder feeding portion may be defined as a space between the pair of manufacturing powder feed surfaces, and the reverse pressure powder feeding portion may be defined as a space between the outer and inner reverse pressure powder feed surfaces.

The inner reverse pressure powder feed surface may be configured to be movable in the extension direction of the gap between the manufacturing powder feeding portion and the outer reverse pressure powder feed surface.

The hopper unit may include a pair of side frames extending parallel to each other above the pressure roller in the extension direction of the gap; and a movable frame slidably coupled to the side frame, and the inner reverse pressure powder feed surface may be provided on one side of the movable frame.

The manufacturing powder feeding portion and the reverse pressure powder feeding portion may be spaced apart from each other by a reference distance in the extension direction of the gap, and the reference distance may be greater than or equal to 2 mm and smaller than the width of the manufacturing powder feeding portion.

The reference distance may be 5 mm or more.

The apparatus of manufacturing an electrode sheet may further include a recovery unit for recovering a reverse pressure sheet formed by the reverse pressure powder from the pressure roller; and a grinding unit for grinding the reverse pressure sheet recovered by the recovery unit.

The reverse pressure powder may include recycled powder formed in the grinding unit.

The reverse pressure powder feeding portion may include a first and a second reverse pressure powder feeding portions respectively disposed at both sides of the manufacturing powder feeding portion in the extension direction of the gap.

The manufacturing powder feeding portion may have a manufacturing powder feed width in the extension direction of the gap, the reverse pressure powder feeding portion may have a reverse pressure powder feed width in the extension direction of the gap, and the manufacturing powder feed width may have a different length from the reverse pressure powder feed width.

The manufacturing powder feed width may be longer than the reverse pressure powder feed width.

The ratio Wm:Wp between the manufacturing powder feed width Wm and the reverse pressure powder feed width Wp may be 20:1 to 1:1.

The ratio may be 8:1 to 1:1.

According to another aspect of the present disclosure, there is provided a method of manufacturing an electrode sheet including a step of feeding manufacturing powder into one section of a gap formed between a pair of pressure rollers; a step of feeding reverse pressure powder into another section of the gap; a step of forming an electrode sheet by pressing the manufacturing powder with the pair of pressure rollers; and a step of forming a reverse pressure sheet by pressing the reverse pressure powder with the pair of pressure rollers.

In the step of feeding the reverse pressure powder, the reverse pressure powder may be fed at a predetermined distance from the manufacturing powder to allow the electrode sheet and the reverse pressure sheet to be partitioned from each other.

The method of manufacturing an electrode sheet may further include a step of grinding the reverse pressure sheet to form recycled powder, and the reverse pressure powder may be at least partially composed of the recycled powder.

The step of feeding the reverse pressure powder may include a step of feeding a first reverse pressure powder to one side of the one section in the extension direction of the gap; and a step of feeding a second reverse pressure powder to the other side of the one section in the extension direction of the gap.

### ADVANTAGEOUS EFFECTS

According to one aspect of the present disclosure, a manufacturing powder for manufacturing an electrode sheet and a reverse pressure powder for forming reverse pressure are fed from a hopper unit into a gap of pressure rollers, which may reduce the pressure difference between the central part and the side part of the section where the manufacturing powder is fed. This may reduce the amount of deformation of the pressure rollers, thereby enabling the manufacture of high-quality electrode sheets with uniform properties in the width direction.

Effects to be obtained by the present disclosure are not limited to the above-described effects, and other effects not mentioned herein may be clearly understood by those having ordinary skill in the art from this specification and the accompanying drawings.

### DESCRIPTION OF DRAWINGS

FIG. 1 is a view schematically showing that an electrode sheet is manufactured by an apparatus of manufacturing an electrode sheet according to an embodiment of the present disclosure.
FIG. 2 is a perspective view of a hopper unit of an apparatus of manufacturing an electrode sheet according to an embodiment of the present disclosure, viewed from above.
FIG. 3 is a plan view of the movable frame illustrated in FIG. 2.
FIG. 4 is a plan view of a hopper unit and pressure rollers of an apparatus of manufacturing an electrode sheet according to an embodiment of the present disclosure, viewed from above.
FIG. 5 is an enlarged view of a portion of FIG. 4.
FIG. 6 is a view schematically showing that a reverse pressure sheet is recycled by an apparatus of manufacturing an electrode sheet according to an embodiment of the present disclosure.
FIG. 7 is a flowchart of a method of manufacturing an electrode sheet according to an embodiment of the present disclosure.

### BEST MODE

Preferred embodiments of the present disclosure will be described in detail to enable those skilled in the art to easily carry out the present disclosure. However, the present disclosure may be implemented in various different forms and is not limited or restricted by the following embodiments.

In order to clearly describe the present disclosure, detailed descriptions of portions unrelated to the present disclosure or known technologies that may unnecessarily obscure the gist of the present disclosure have been omitted. And, when assigning reference numerals to components in each drawing in this specification, the same or similar reference numerals are assigned to the same or similar components throughout the specification.

Additionally, the terms or words used in the specification and claims should not be construed as limited to their ordinary or dictionary meanings, but should be construed as meanings and concepts consistent with the technical idea of the present disclosure based on the principle that inventors may appropriately define the concepts of terms in order to explain their invention in the best way.

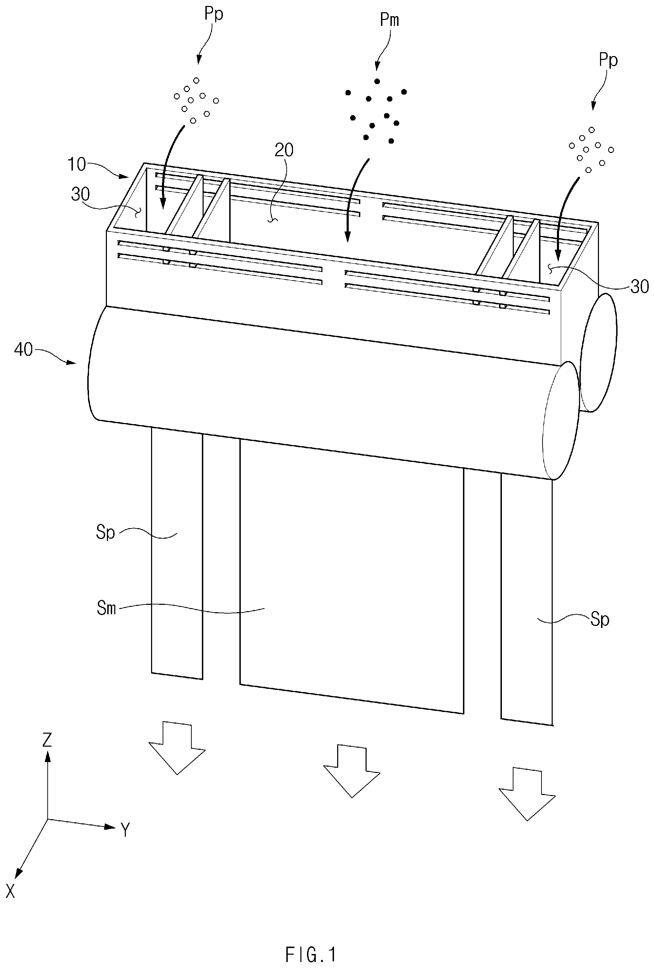

FIGS. 1 to 6 disclose an apparatus of manufacturing an electrode sheet 1 (hereinafter, referred to as the manufacturing apparatus) according to an embodiment of the present disclosure. Referring to FIG. 1, the manufacturing apparatus 1 according to an embodiment of the present disclosure may be an apparatus for manufacturing an electrode sheet Sm having a film shape by compressing and molding a manufacturing powder Pm.

At this time, the electrode sheet Sm may be used to manufacture an electrode. For example, the electrode sheet Sm may be attached to a foil-shaped current collector to form an electrode. The plurality of electrodes may be laminated with a separator interposed therebetween to form an electrode assembly for a secondary battery.

Here, the manufacturing powder Pm may be a slurry in which an electrode active material, a binder, a conductive material, and the like are mixed, and the polarity of the electrode sheet Sm may be determined depending on the type of the electrode active material. The type of material included in the manufacturing powder Pm may be appropriately changed as necessary.

In addition to the manufacturing powder Pm, a reverse pressure powder Pm may be additionally fed into the present manufacturing apparatus 1. In the present manufacturing apparatus 1, a pair of pressure rollers 40 may press the powder to form a sheet, and this reverse pressure powder Pm may form a predetermined reverse pressure on the pressure rollers 40.

This may suppress deformation such as bending in the pressure rollers 40, thereby improving the uniformity of physical properties in the width direction of the electrode sheet Sm. Here, the physical properties may be any one of the thickness, density, electrode capacity, and electrode resistance of the electrode sheet Sm, but are not limited thereto.

Meanwhile, the reverse pressure powder Pp may be made of the same material as the manufacturing powder Pm, or may be made of a completely different material. Alternatively, the reverse pressure powder Pp may not include at least one of the materials present in the manufacturing powder Pm. Alternatively, the reverse pressure powder Pp may further include materials not included in the manufacturing powder Pm. The reverse pressure powder Pp may be a powder having a greater repulsive force than the manufacturing powder Pm, but is not limited thereto.

Hereinafter, a manufacturing apparatus according to an embodiment of the present disclosure will be described in detail.

Referring to FIG. 1, the manufacturing apparatus 1 according to an embodiment of the present disclosure may include a pair of pressure rollers 40 extending parallel to each other and a hopper unit 10 for feeding powder between the pressure rollers 40.

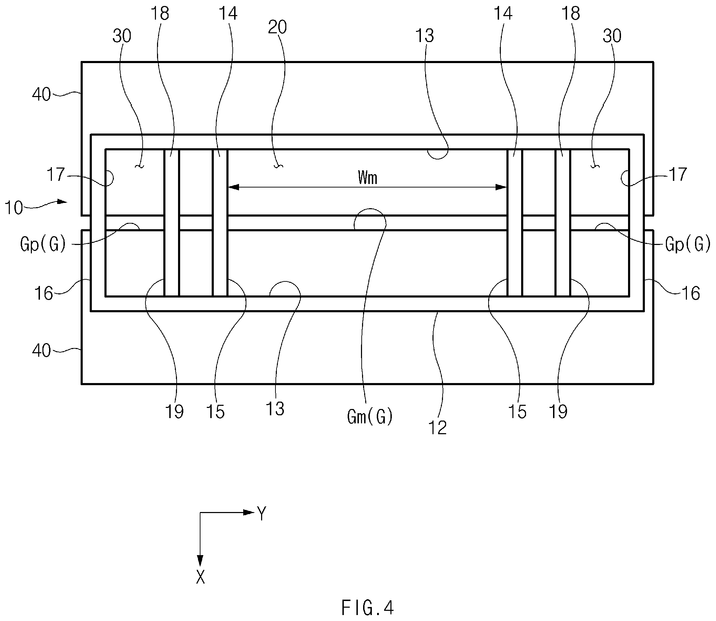

Referring to FIG. 4, a gap G may be formed between the pair of pressure rollers 40. The gap G may mean a gap provided between the pair of pressure rollers 40 and into which powder is fed.

At this time, the gap G may extend in a direction (Y-axis direction) parallel to the extension direction of the pressure roller 40. The width (measured in the X-axis direction) of the gap G may be appropriately set in consideration of the size of the pressure roller 40, the characteristics of the electrode sheet Sm to be manufactured, and the like.

In the present embodiment, the gap G may include one section (hereinafter, referred to as the manufacturing section Gm) positioned relatively at the center and another section (hereinafter, referred to as the reverse pressure section Gp) positioned on one side of the manufacturing section Gm.

At this time, the reverse pressure sections Gp are configured as a pair, and may each be positioned at both sides of the manufacturing section Gm in the extension direction (Y-axis direction). Of course, the reverse pressure section Gp may be configured as a single section, and may be positioned on only one side of the manufacturing section Gm.

Referring to FIGS. 1 to 4, the manufacturing apparatus 1 according to an embodiment of the present disclosure may include a hopper unit 10. The hopper unit 10 may include a manufacturing powder feeding portion 20 for feeding the manufacturing powder Pm into the manufacturing section Gm of the gap G and a reverse pressure powder feeding portion 30 for feeding the reverse pressure powder Pp into the reverse pressure section Gp of the gap G.

At this time, in the present embodiment, the manufacturing powder feeding portion 20 may be defined as a space provided in the hopper unit 10 to accommodate the manufacturing powder Pm, and the reverse pressure powder feeding portion 30 may be defined as a space provided in the hopper unit 10 to accommodate the reverse pressure powder Pp.

In the present embodiment, the hopper unit 10 may include a side frame 12. The side frame 12 may be a frame for defining the manufacturing powder feeding portion 20 and the reverse pressure powder feeding portion 30.

In the present embodiment, the side frame 12 may have a plate shape. The side frame 12 may extend in a direction parallel to the pressure roller 40 (Y-axis direction). The length of the side frame 12 may be shorter than or equal to that of the pressure roller 40. When viewed in the length direction (Y-axis direction), the side frame 12 may be positioned between both ends of the pressure roller 40.

At this time, in the present embodiment, the side frames 12 may be configured as a pair. And, the pair of side frames 12 may be disposed at a predetermined distance in the width direction (X-axis direction) of the gap G. Accordingly, a predetermined space may be defined between the pair of side frames 12. Hereinafter, a surface of the outer surface of the side frame 12 facing the other side frame 12 is referred to as the side surface 13.

Meanwhile, in the present embodiment, the side frame 12 may have a guide portion 12a. The guide portion 12a may be configured to guide the movement of a middle frame 14 or a movable frame 18 to be described later. The guide portion 12a may be provided in the shape of a groove or hole extending in the extension direction of the side frame 12 (Y-axis direction).

At this time, in the present embodiment, the guide portions 12a may be configured in plurality. The plurality of guide portions 12a may be disposed at a predetermined distance from each other in a direction (Z-axis direction) in which the powder passes through the hopper unit 10. This may be to allow the middle frame 14 or the movable frame 18 to be described later to be erected in the above direction (Z-axis direction).

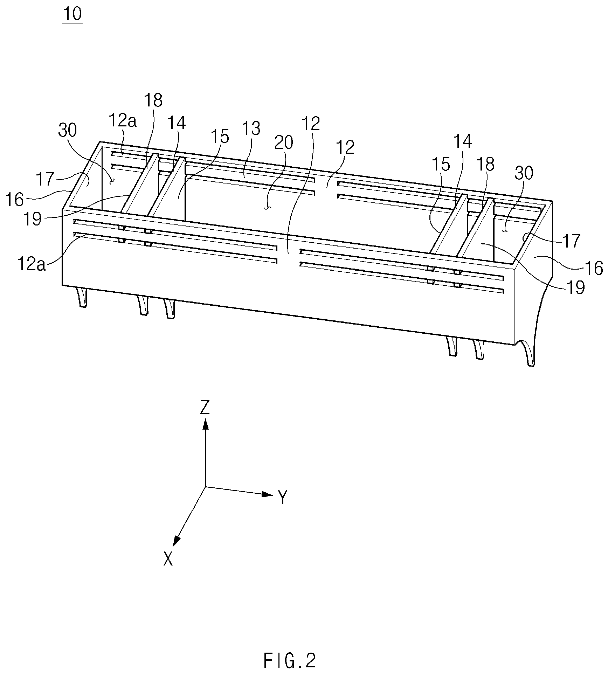

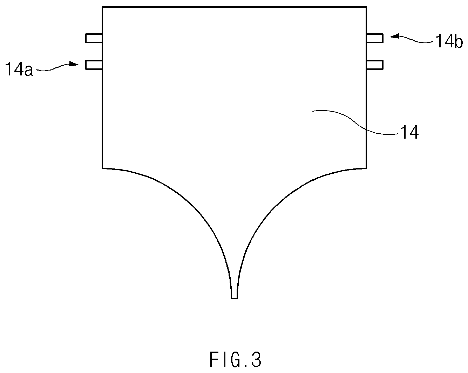

Referring to FIGS. 2 and 3, the hopper unit 10 of the manufacturing apparatus 1 according to the present embodiment may include a middle frame 14. The middle frame 14 may be configured to define the manufacturing powder feeding portion 20.

In the present embodiment, the middle frame 14 may have a plate shape having a predetermined thickness in the length direction (Y-axis direction) of the pressure roller 40. The middle frame 14 may have a predetermined width in a direction parallel to the width of the gap G (X-axis direction).

At this time, the lower edge part of the middle frame 14 may have a shape in which a portion of two arcs face each other. At this time, the arcs may be understood to include a portion of an elliptical shape.

Accordingly, the lower edge part of the middle frame 14 may be inserted into the gap G from the upper side (positive direction of the Z-axis) of the pressure roller 40, thereby minimizing the leakage of powder to the opposite side of the middle frame 14.

Meanwhile, in the present embodiment, the middle frame 14 may be positioned between the pair of side frames 12. Accordingly, the space provided between the pair of side frames 12 may be partitioned by the middle frame 14.

At this time, a guide protrusion 14a may be provided on the edge part of the middle frame 14 in the width direction (X-axis direction). The guide protrusion 14a may be slidably coupled to the guide portion 12a. Accordingly, the middle frame 14 may be guided and moved in the extension direction (Y-axis direction) of the guide portion 12a.

At this time, the guide protrusions 14a may be configured in plurality to correspond to the guide portions 12a. And, the plurality of guide protrusions 14a may be positioned at a predetermined distance in the direction (Z-axis direction) in which the powder passes through the hopper unit 10.

The plurality of guide protrusions 14a may be coupled to the plurality of guide portions 12a, respectively. This allows the middle frame 14 to be maintained in a phase that is erected along the above direction (Z-axis direction).

Referring to FIGS. 2 to 4, in the present embodiment, the middle frames 14 may be configured as a pair. The pair of middle frames 14 may be positioned at a predetermined distance in the length direction (Y-axis direction) of the pressure roller 40. Hereinafter, a surface of the outer surface of the middle frame 14 facing the other middle frame 14 is referred to as the manufacturing powder feed surface 15.

In the present embodiment, the manufacturing powder feeding portion 20 may be defined by the side surfaces 13 facing each other and the manufacturing powder feed surfaces 15 facing each other. The manufacturing powder feeding portion 20 may have a predetermined width (hereinafter, referred to as the manufacturing powder feed width Wm) in the extension direction (Y-axis direction) of the gap G. As the distance between the pair of middle frames 14 is adjusted, the length of the manufacturing powder feed width Wm may be adjusted.

Referring to FIGS. 2, 4, and 5 again, the hopper unit 10 may include an outer frame 16. The outer frame 16 may be a frame for defining the reverse pressure powder feeding portion 30.

In the present embodiment, the outer frame 16 may be positioned between the pair of side frames 12. The outer frames 16 may be configured as a pair. The pair of outer frames 16 may each be provided at both sides of the side frame 12 in the extension direction. Accordingly, each one of the reverse pressure powder feeding portions 30 may be provided at both sides of the manufacturing powder feeding portion 20.

At this time, the outer frame 16 may be positioned adjacent to an end of the side frame 12 in the extension direction. The outer frame 16 may close one side of the space provided between the pair of side frames 12. At this time, the portion closed by the outer frame 16 may be a portion positioned on one side of the gap G in the extension direction.

In the present embodiment, the outer frame 16 may have a plate shape. The outer frame 16 may have a predetermined thickness in the extension direction (Y-axis direction) of the gap G. The lower edge part of the outer frame 16 may be configured identically to the lower edge part of the middle frame 14 described above. Hereinafter, a surface of both surfaces of the outer frame 16 facing the center of the gap G is referred to as the outer reverse pressure powder feed surface 17.

The hopper unit 10 of the manufacturing apparatus 1 according to an embodiment of the present disclosure may further include a movable frame 18. The movable frame 18 may be a frame for defining the reverse pressure powder feeding portion 30 together with the outer frame 16.

In the present embodiment, the movable frame 18 may have a predetermined thickness in the extension direction (Y-axis direction) of the gap G. The movable frame 18 may have a predetermined width in the width direction of the gap G (X-axis direction). The lower edge part of the movable frame 18 may be configured identically to the lower edge part of the middle frame 14 described above.

Meanwhile, in the present embodiment, the movable frame 18 may be positioned between the outer frame 16 and the middle frame 14 between the pair of side frames 12. Accordingly, the space between the outer frame 16 and the middle frame 14 may be partitioned by the movable frame 18.

Hereinafter, among both surfaces of the movable frame 18, a surface facing outward in the extension direction of the gap G is referred to as the inner reverse pressure powder feed surface 19. In other words, the inner reverse pressure powder feed surface 19 may face the outer reverse pressure powder feed surface 17.

Meanwhile, in the present embodiment, the movable frames 18 may be configured as a pair. According to the present embodiment, the middle frame 14 and the outer frame 16 are each configured as a pair and are positioned at both sides of the manufacturing powder feeding portion 20, respectively.

Therefore, the space between the middle frame 14 and the outer frame 16 are also configured as a pair and may be positioned at corresponding positions, respectively. The pair of movable frames 18 may be respectively positioned in the pair of spaces to partition the spaces.

At this time, in the present embodiment, the movable frame 18 may be configured to be movable in the extension direction (Y-axis direction) of the gap G between the outer frame 16 and the middle frame 14.

To this end, the movable frame 18 may have at least one guide protrusion, which may be slidably coupled to the guide portion 12a of the side frame 12. The guide protrusion of the movable frame 18 may be configured identically to the side protrusion of the middle frame 14, but is not limited thereto.

Referring to FIGS. 1 to 5, in the present embodiment, the reverse pressure powder feeding portion 30 may be defined by the inner reverse pressure powder feed surface 19 and the outer reverse pressure powder feed surface 17 facing each other. As described above, the reverse pressure powder feeding portions 30 are configured as a pair, and may each be positioned at both sides of the manufacturing powder feeding portion 20.

As such, in the manufacturing apparatus 1 according to an embodiment of the present disclosure, the manufacturing powder Pm is fed into the central part of the gap G, and the reverse pressure powder Pp is fed into the side of the central part, thereby forming a predetermined reverse pressure on the side of the pressure roller 40.

Therefore, the bending deformation of the pressure roller 40 may be minimized, and thus a uniform pressure (static pressure) may be formed in the central part where the manufacturing powder Pp is fed. Accordingly, a high-quality electrode sheet Sm having uniform properties in the width direction may be manufactured.

In particular, the reverse pressure forming structure according to the present embodiment has a simple structure. Additionally, in the reverse pressure forming structure according to the present embodiment, the powder is fed into the gap G, and the electrode sheet Sm and the reverse pressure sheet Sp may be formed at the same speed.

That is, in the present embodiment, no separate film member for forming reverse pressure is fed to the side of the pressure roller 40, and thus a problem arising from the speed difference between the electrode sheet Sm and the film member may not occur.

Meanwhile, the reverse pressure powder feeding portion 30 may have a predetermined width (hereinafter, referred to as the reverse pressure powder feed width Wp) in the extension direction (Y-axis direction) of the gap G. As the movable frame 18 is moved, the length of the reverse pressure powder feed width Wp may be adjusted.

In the present embodiment, the manufacturing powder feeding portion 20 and the reverse pressure powder feeding portion 30 may be disposed at a predetermined distance (hereinafter, referred to as the reference distance (d)) in the extension direction (Y-axis direction) of the gap G.

In the present embodiment, the reference distance (d) may refer to a distance between manufacturing powder feed surface 15 of the middle frame 14 and the inner reverse pressure powder feed surface 19 of the movable frame 18. The size of the reference distance (d) may be appropriately set in consideration of the width length of the gap G, the size of the pressure roller 40, the target thickness value of the electrode sheet Sm, the target width length value of the electrode sheet Sm, and the like.

This configuration may be to allow the electrode sheet Sm and the reverse pressure sheet Sp to be partitioned from each other. This may prevent the physical components of the electrode sheet Sm from being affected by the reverse pressure sheet Sp.

At this time, the fact that two objects can be partitioned may be understood to include not only a state where the two objects are separated from each other without any connection, but also a state where the two objects may be separated by a relatively small external force compared to the forming force of the pressure roller 40 even if they are partially connected.

For example, to achieve the above-described effect to a minimum, the reference distance (d) may be 2 mm or more. Alternatively, to achieve the above-described effect, the reference distance (d) may be 3 mm or more. Alternatively, to achieve the above-described effect stably, the reference distance may be 5 mm or more.

At this time, if the reference distance (d) becomes excessively large, the structure of the manufacturing apparatus 1 may be enlarged and the magnitude of the generated reverse pressure may decrease. Considering this, the reference distance (d) may be less than or equal to the manufacturing powder feed width Wm. Alternatively, the reference distance (d) may be less than or equal to the reverse pressure powder feed width Wp.

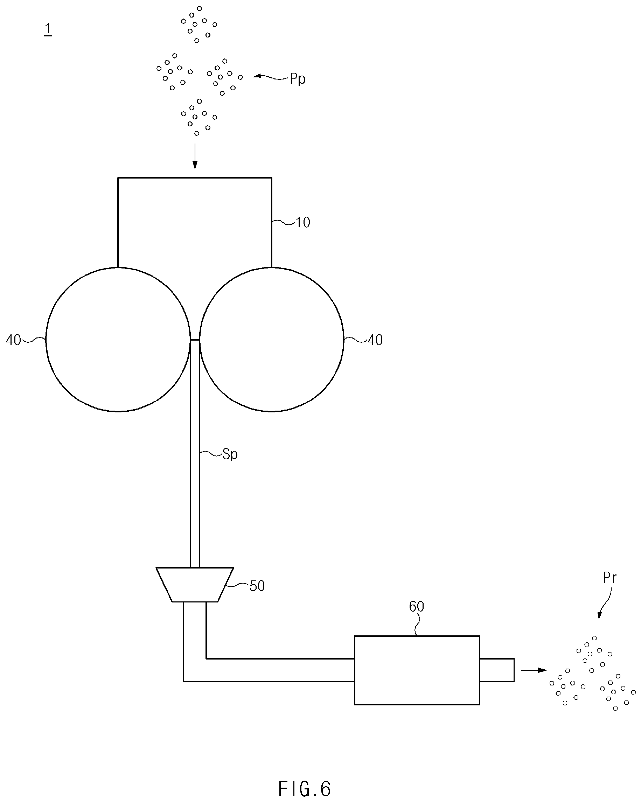

Referring to FIGS. 1 and 6 again, the manufacturing apparatus 1 according to an embodiment of the present disclosure may include a recovery unit 50. The recovery unit 50 may be a unit for recovering the reverse pressure sheet Sp formed by the pressure roller 40.

In the present embodiment, the recovery unit 50 may include a pipe where the reverse pressure sheet Sp may enter and a funnel for guiding the reverse pressure sheet Sp discharged from the pressure roller 40 to the pipe. However, the configuration of the recovery unit 50 is not particularly limited as long as it may recover the reverse pressure sheet Sp.

The manufacturing apparatus 1 according to an embodiment of the present disclosure may include a grinding unit 60. The grinding unit 60 may be a unit for grinding the reverse pressure sheet Sp recovered by the recovery unit 50.

In the present embodiment, the grinding unit 60 may include a grinding screw for grinding the reverse pressure sheet Sp within a case having an enclosure shape. However, the configuration of the grinding unit 60 is not particularly limited as long as it may grind a sheet-shaped object into a powder form.

The reverse pressure sheet Sp may be grinded into powder (hereinafter, referred to as recycled powder Pr) by this grinding unit 60. The recycled powder Pr may have a stronger repulsive force than the manufacturing powder Pm. The recycled powder Pr may be used as the reverse pressure powder Pp again.

In other words, the reverse pressure powder Pp may include recycled powder Pr. Alternatively, the reverse pressure powder Pp may be composed of only recycled powder Pr. That is, a circulation process of the reverse pressure powder Pp may be achieved.

Thus, according to the present manufacturing apparatus 1, the input of additional powder for forming the reverse pressure may be minimized, while a predetermined reverse pressure may be continuously generated on the pressure roller 40.

Hereinafter, the uniformity of the transverse properties of the electrode sheets manufactured by the manufacturing apparatus according to Embodiments 1 to 3 of the present disclosure is compared with that of the electrode sheets manufactured by the manufacturing apparatus according to Comparative Examples 1 and 2.

**[Table 1]**

| Classification | GAP | Wp | Wm |
|---|---|---|---|
| | [µm] | [mm] | [mm] |
| Comparative Example 1 | 200 | 0 | 400 |
| Comparative Example 2 | 300 | 0 | 400 |
| Embodiment 1 | 200 | 50 | 400 |
| Embodiment 2 | 300 | 50 | 400 |
| Embodiment 3 | 300 | 20 | 400 |

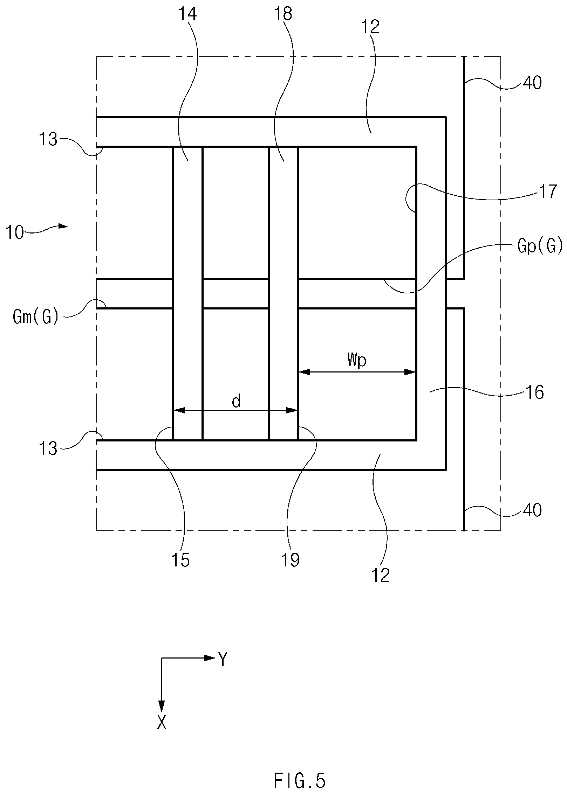

The GAP listed in row 1 of Table 1 is the width length of the gap G illustrated in FIGS. 4 and 5, Wp is the length of the reverse pressure powder feed width, and Wm is the length of the manufacturing powder feed width. At this time, the value of '0' for Wp may mean that a configuration corresponding to the reverse pressure powder feeding portion of the manufacturing apparatus according to the embodiment of the present disclosure is not provided.

For example, the manufacturing apparatus according to Comparative Example 1 may be a manufacturing apparatus in which the width length of the gap G is 200 [µm], the width of the space where the manufacturing powder is fed is 400 [mm], and the reverse pressure powder feeding portion is not provided. The manufacturing apparatus according to Embodiment 2 may be a manufacturing apparatus in which the width length of the gap G is 300 [µm], the manufacturing powder feed width Wm is 400 [mm], and the reverse pressure powder feed width Wp is 50 [mm].

**[Table 2]**

| Comparative Example | | Width Direction Properties | | | | | | | Width Direction Uniform Characteristics | | | Wave Edge |
|---|---|---|---|---|---|---|---|---|---|---|---|---|
| | | OS-1 | 2 | 3 | 4 | 5 | 6 | DS-7 | Aver. | Max-Min | Uniformity | [mm] |
| Comparative Example 1 | Loading (g/25cm²) | 2.315 | 2.390 | 2.428 | 2.452 | 2.433 | 2.384 | 2.309 | 2.387 | 0.143 | 2.99% | 5 |
| | Thickness (mm) | 0.428 | 0.448 | 0.458 | 0.466 | 0.456 | 0.447 | 0.427 | 0.447 | 0.039 | 4.36% | |
| | Density (g/cc) | 2.16 | 2.13 | 2.12 | 2.10 | 2.13 | 2.13 | 2.16 | 2.136 | 0.059 | 1.39% | |
| Comparative Example 2 | Loading (g/25cm²) | 2.512 | 2.521 | 2.567 | 2.596 | 2.574 | 2.538 | 2.514 | 2.546 | 0.084 | 1.65% | 3 |
| | Thickness (mm) | 0.486 | 0.492 | 0.505 | 0.512 | 0.504 | 0.491 | 0.484 | 0.496 | 0.028 | 2.82% | |
| | Density (g/cc) | 2.07 | 2.05 | 2.03 | 2.03 | 2.04 | 2.07 | 2.08 | 2.052 | 0.049 | 1.21% | |
| Embodiment 1 | Loading (g/25cm²) | 2.430 | 2.444 | 2.469 | 2.480 | 2.472 | 2.439 | 2.432 | 2.452 | 0.050 | 1.02% | 1 |
| | Thickness | 0.479 | 0.485 | 0.488 | 0.491 | 0.489 | 0.483 | 0.477 | 0.485 | 0.014 | 1.44% | |
| | (mm) | | | | | | | | | | | |
| | Density (g/cc) | 2.03 | 2.02 | 2.02 | 2.02 | 2.02 | 2.02 | 2.04 | 2.024 | 0.023 | 0.57% | |
| Embodiment 2 | Loading (g/25cm²) | 2.619 | 2.631 | 2.633 | 2.642 | 2.635 | 2.629 | 2.620 | 2.630 | 0.023 | 0.43% | 0.5 |
| | Thickness (mm) | 0.528 | 0.531 | 0.533 | 0.536 | 0.534 | 0.53 | 0.529 | 0.532 | 0.008 | 0.75% | |
| | Density (g/cc) | 1.98 | 1.98 | 1.98 | 1.97 | 1.97 | 1.98 | 1.98 | 1.979 | 0.013 | 0.32% | |
| Embodiment 3 | Loading (g/25cm²) | 2.569 | 2.588 | 2.609 | 2.621 | 2.612 | 2.589 | 2.565 | 2.593 | 0.056 | 1.08% | 2 |
| | Thickness (mm) | 0.507 | 0.516 | 0.524 | 0.526 | 0.523 | 0.514 | 0.506 | 0.517 | 0.020 | 1.94% | |
| | Density (g/cc) | 2.03 | 2.01 | 1.99 | 1.99 | 2.00 | 2.01 | 2.03 | 2.008 | 0.036 | 0.90% | |

Table 2 shows the width direction properties of the electrode sheets manufactured by the manufacturing apparatus according to Comparative Example 1, Comparative Example 2, and Embodiments 1 to 3. The terms 'loading', 'thickness', and 'density' listed in column 2 of Table 2 mean the pressure applied to the electrode sheet by the pressure roller, the thickness of the electrode sheet, and the density of the electrode sheet, respectively.

The terms 'OS-1' to 'DS-7' listed in row 2 of Table 2 mean points on the electrode sheets arranged relatively based on the width direction (Y-axis direction). For example, 'OS-1' means a point on an electrode sheet positioned relatively farthest to the right among 'OS-1' to 'DS-7', 'DS-7' means a point on an electrode sheet positioned relatively farthest to the left among 'OS-1' to 'DS-7', and '4' means a point on an electrode sheet positioned relatively most centrally among 'OS-1' to 'DS-7'.

As a specific example, the data listed in the cell corresponding to '4' for the width direction property value in the row corresponding to Embodiment 1 in Table 2 mean that the pressure applied to the central part of the electrode sheet manufactured by the manufacturing apparatus according to Embodiment 1 is 2.480 [g/25cm²], the thickness is 0.489 [mm], and the density is 2.02 [g/cc].

Meanwhile, the 'Aver' and 'Max-Min' values each listed in rows 10 to 12 of Table 2 mean the 'average value' and the difference between 'maximum and minimum values' of the data for 'OS-1' to 'DS-7' listed in the same column, respectively. 'Uniformity' represents the percentage value of 'Max-Min' relative to 'Aver' expressed in percent (%). The lower 'uniformity' may mean higher uniformity in the width direction properties of the corresponding electrode sheet.

Referring to Table 2 again, it may be confirmed that the loading uniformity, thickness uniformity, and density uniformity of the electrode sheet according to Embodiment 3 were significantly reduced to approximately 2/3, 1/2, and 3/4 of the values for the loading uniformity, thickness uniformity, and density uniformity of the electrode sheet according to Comparative Example 2.

These results indicate that the width direction properties of the electrode sheet were significantly improved by the reverse pressure powder through the reverse pressure powder feeding portion. Considering this, the ratio of the manufacturing powder feed width Wm to the reverse pressure powder feed width Wp may be 20:1 or less. Here, values of 20:1 or less mean values such as 15:1, 13:1, or the like.

**[Table 3]**

| Classification | GAP | Edge Feed Width | CT Feed Width | Electrode Capacity Uniformity | Electrode Resistance Uniformity |
|---|---|---|---|---|---|
| | [µm] | [mm] | [mm] | [%] | [%] |
| Comparative Example 1 | 200 | 0 | 400 | 1.71% | 4.43% |
| Comparative Example 2 | 300 | 0 | 400 | 1.13% | 0.90% |
| Embodiment 1 | 200 | 50 | 400 | 0.52% | 0.79% |
| Embodiment 2 | 300 | 50 | 400 | 0.38% | 3.27% |

The 'Electrode Capacity Uniformity' listed in column 5 of Table 3 is the calculated electrode capacity uniformity for electrodes including the electrode sheets manufactured by the manufacturing apparatus according to the corresponding Comparative Examples or Embodiments. Specifically, after measuring the local electrode capacity for each of the 'OS-1' to 'DS-7' points arranged in parallel based on the width direction, the 'average value' and the difference between the 'maximum and minimum values' were calculated, and then the 'uniformity' was calculated based on this. This calculation method was equally applied to the 'Electrode Resistance Uniformity' listed in column 6.

Referring to Table 2, it may be confirmed that the loading uniformity, thickness uniformity, and density uniformity of the electrode sheet according to Embodiment 1 were significantly reduced to approximately 1/3, 1/3, and 1/3 of the values for the loading uniformity, thickness uniformity, and density uniformity of the electrode sheet according to Comparative Example 1.

In particular, referring to Table 3, it may be confirmed that the electrode capacity uniformity and electrode resistance uniformity of the electrode sheet according to Embodiment 1 were significantly reduced to approximately 1/3 and 1/7 of the values for the electrode capacity uniformity and electrode resistance uniformity of the electrode sheet according to Comparative Example 1.

These results indicate that the width direction properties of the electrode sheet were significantly improved by the reverse pressure powder through the reverse pressure powder feeding portion. Considering this, the ratio of the manufacturing powder feed width Wm to the reverse pressure powder feed width Wp may be 8:1 or less.

Meanwhile, when the reverse pressure powder feed width Wp is excessively large in the manufacturing apparatus according to the embodiment of the present disclosure, the size of the manufacturing apparatus may become unnecessarily large, thereby reducing space efficiency. Considering this, the ratio of the manufacturing powder feed width Wm to the reverse pressure powder feed width Wp may be 1:1 or more. Here, values of 1:1 or more may mean values such as 2:1, 5:1, or the like.

Meanwhile, in the present embodiment, the middle frame 14 and the movable frame 18 of the hopper unit 10 have been described as separate plates. However, the middle frame 14 and the movable frame 18 may be provided integrally as necessary. For example, the middle frame 14 and the movable frame 18 may be replaced with a block-shaped frame having a thickness corresponding to the reference distance (d).

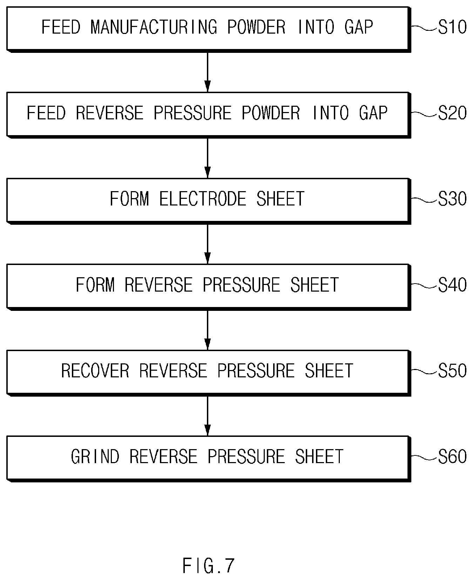

Hereinafter, a method of manufacturing an electrode sheet (hereinafter, referred to as the manufacturing method) according to an embodiment of the present disclosure will be described. FIG. 7 is a flowchart of a method of manufacturing an electrode sheet according to an embodiment of the present disclosure.

The manufacturing method according to an embodiment of the present disclosure may be performed by the manufacturing apparatus according to an embodiment of the present disclosure described above. Hereinafter, it will be described on the premise that the manufacturing method according to an embodiment of the present disclosure is performed by the manufacturing apparatus according to an embodiment of the present disclosure.

Referring to FIGS. 1 and 7, in the manufacturing method according to an embodiment of the present disclosure, the manufacturing powder Pm is fed into the manufacturing section Gm of the gap G (S10), and the reverse pressure powder Pp is fed into the reverse pressure section Gp of the gap G (S20). At this time, the order of steps S10 and S20 is not particularly limited, and the two steps may be performed simultaneously.

As such, in the manufacturing method according to an embodiment of the present disclosure, the reverse pressure powder Pm may be used to generate reverse pressure at the end of the pressure roller 40. Accordingly, the bending deformation of the pressure roller 40 may be minimized, thereby significantly improving the uniformity of the width direction properties of the electrode sheet Sm to be manufactured.

At this time, in step S20 according to the present embodiment, a first reverse pressure powder Pp may be fed into one side of the manufacturing section Gm, and a second reverse pressure powder Pp may be fed into the other side. Accordingly, reverse pressure may be generated on both sides of the manufacturing section Gm, respectively.

At this time, in step S20 according to the present embodiment, the reverse pressure powder Pp may be fed at a predetermined reference distance (d) from the manufacturing powder Pm. This may be to allow the electrode sheet Sm and the reverse pressure sheet Sp formed by the pressure roller 40 to be easily partitioned.

Next, in the manufacturing method according to an embodiment of the present disclosure, the pressure roller 40 presses and forms the electrode sheet Sm with the manufacturing powder Pm fed in step S10 (S30), and the pressure roller 40 presses and forms the reverse pressure sheet Sp with the reverse pressure powder Pp fed in step S20 (S40). At this time, the order of steps S30 and S40 is not particularly limited, and the two steps may be performed simultaneously.

Referring to FIGS. 6 and 7, in the manufacturing method according to an embodiment of the present disclosure, the recovery unit 50 may recover the reverse pressure sheet Sp pressed and formed in step S40 (S50), and the grinding unit 60 may grind the reverse pressure sheet Sp recovered in step S50 to form recycled powder Pr (S60).

At this time, the recycled powder Pr formed in step S60 may be included in the reverse pressure powder Pp of step S20. In other words, the recycled powder Pr in step S60 may be used as the reverse pressure powder Pp in step S20. Accordingly, the amount of additional reverse pressure powder Pp that should be added to the manufacturing method may be minimized.

The manufacturing method according to an embodiment of the present disclosure may be performed by the manufacturing apparatus according to an embodiment of the present disclosure, as described above. However, the manufacturing apparatus capable of performing the manufacturing method is not limited to the manufacturing apparatus according to an embodiment of the present disclosure.

The present disclosure has been hereinabove described with regard to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

### [List of Reference Numerals]

1: Apparatus of manufacturing electrode sheet
10: Hopper unit
20: Manufacturing powder feeding portion
30: Reverse pressure powder feeding portion
40: Pressure roller
50: Recovery unit
60: Powder unit
Pm: Manufacturing powder
Pp: Reverse pressure powder
Pr: Recycled powder
Sm: Electrode sheet
Sp: Reverse pressure sheet

## Claims

1. An apparatus of manufacturing an electrode sheet, comprising:
a pair of pressure rollers disposed parallel to each other to form a gap therebetween; and
a hopper unit for feeding powder into the gap,
wherein the hopper unit comprises:
a manufacturing powder feeding portion configured to feed manufacturing powder for manufacturing an electrode sheet into one section of the gap; and
a reverse pressure powder feeding portion configured to feed reverse pressure powder into another section of the gap.

2. The apparatus of manufacturing an electrode sheet according to claim 1,
wherein the reverse pressure powder feeding portion allows the reverse pressure powder to be fed to reduce the pressure difference between the central part and the side part of the one section.

3. The apparatus of manufacturing an electrode sheet according to claim 2,
wherein the pressure formed in the one section is configured to decrease due to the pressure formed by the reverse pressure powder.

4. The apparatus of manufacturing an electrode sheet according to claim 1,
wherein the manufacturing powder feeding portion and the reverse pressure powder feeding portion are spaced apart from each other in the extension direction of the gap to allow the electrode sheet formed from the manufacturing powder and the reverse pressure sheet formed from the reverse pressure powder to be partitioned.

5. The apparatus of manufacturing an electrode sheet according to claim 4,
wherein the hopper unit comprises:
a pair of manufacturing powder feed surfaces disposed to face each other along the extension direction of the gap;
an outer reverse pressure powder feed surface facing the manufacturing powder feeding portion in the extension direction of the gap; and
an inner reverse pressure powder feed surface disposed between the manufacturing powder feeding portion and the outer reverse pressure powder feed surface and facing the outer reverse pressure powder feed surface,
wherein the manufacturing powder feeding portion is defined as a space between the pair of manufacturing powder feed surfaces, and
wherein the reverse pressure powder feeding portion is defined as a space between the outer and inner reverse pressure powder feed surfaces.

6. The apparatus of manufacturing an electrode sheet according to claim 5,
wherein the inner reverse pressure powder feed surface is configured to be movable in the extension direction of the gap between the manufacturing powder feeding portion and the outer reverse pressure powder feed surface.

7. The apparatus of manufacturing an electrode sheet according to claim 6,
wherein the hopper unit comprises:
a pair of side frames extending parallel to each other above the pressure roller in the extension direction of the gap; and
a movable frame slidably coupled to the side frame, and
wherein the inner reverse pressure powder feed surface is provided on one side of the movable frame.

8. The apparatus of manufacturing an electrode sheet according to claim 4,
wherein the manufacturing powder feeding portion and the reverse pressure powder feeding portion are spaced apart from each other by a reference distance in the extension direction of the gap, and
wherein the reference distance is greater than or equal to 2 mm and smaller than the width of the manufacturing powder feeding portion.

9. The apparatus of manufacturing an electrode sheet according to claim 8,
wherein the reference distance is 5 mm or more.

10. The apparatus of manufacturing an electrode sheet according to claim 1, further comprising:
a recovery unit for recovering a reverse pressure sheet formed by the reverse pressure powder from the pressure roller; and
a grinding unit for grinding the reverse pressure sheet recovered by the recovery unit.

11. The apparatus of manufacturing an electrode sheet according to claim 10,
wherein the reverse pressure powder comprises recycled powder formed in the grinding unit.

12. The apparatus of manufacturing an electrode sheet according to claim 1,
wherein the reverse pressure powder feeding portion comprises a first and a second reverse pressure powder feeding portions respectively disposed at both sides of the manufacturing powder feeding portion in the extension direction of the gap.

13. The apparatus of manufacturing an electrode sheet according to claim 1,
wherein the manufacturing powder feeding portion has a manufacturing powder feed width in the extension direction of the gap,
wherein the reverse pressure powder feeding portion has a reverse pressure powder feed width in the extension direction of the gap, and
wherein the manufacturing powder feed width has a different length from the reverse pressure powder feed width.

14. The apparatus of manufacturing an electrode sheet according to claim 13,
wherein the manufacturing powder feed width is longer than the reverse pressure powder feed width.

15. The apparatus of manufacturing an electrode sheet according to claim 14,
wherein the ratio (Wm:Wp) between the manufacturing powder feed width (Wm) and the reverse pressure powder feed width (Wp) is 20:1 to 1:1.

16. The apparatus of manufacturing an electrode sheet according to claim 15,
wherein the ratio is 8:1 to 1:1.

17. A method of manufacturing an electrode sheet, comprising:
a step of feeding manufacturing powder into one section of a gap formed between a pair of pressure rollers;
a step of feeding reverse pressure powder into another section of the gap;
a step of forming an electrode sheet by pressing the manufacturing powder with the pair of pressure rollers; and
a step of forming a reverse pressure sheet by pressing the reverse pressure powder with the pair of pressure rollers.

18. The method of manufacturing an electrode sheet according to claim 17,
wherein in the step of feeding the reverse pressure powder, the reverse pressure powder is fed at a predetermined distance from the manufacturing powder to allow the electrode sheet and the reverse pressure sheet to be partitioned from each other.

19. The method of manufacturing an electrode sheet according to claim 17, further comprising:
a step of grinding the reverse pressure sheet to form recycled powder,
wherein the reverse pressure powder is at least partially composed of the recycled powder.

20. The method of manufacturing an electrode sheet according to claim 17,
wherein the step of feeding the reverse pressure powder comprises:
a step of feeding a first reverse pressure powder to one side of the one section in the extension direction of the gap; and
a step of feeding a second reverse pressure powder to the other side of the one section in the extension direction of the gap.
